(19) Europäisches Patentamt
European Patent Office
Office européen des brevets

(11) Veröffentlichungsnummer : **0 053 766 B2**

(12) # NEUE EUROPÄISCHE PATENTSCHRIFT

(45) Veröffentlichungstag der neuen Patentschrift : **24.07.91 Patentblatt 91/30**

(51) Int. Cl.[5] : **C08G 18/80**, C08G 18/10, C08G 18/42, C09D 175/06

(21) Anmeldenummer : **81109945.6**

(22) Anmeldetag : **27.11.81**

(54) **Verfahren zur Herstellung von Ueberzügen.**

Die Akte enthält technische Angaben, die nach dem Eingang der Anmeldung eingereicht wurden und die nicht in dieser Patentschrift enthalten sind.

(30) Priorität : **10.12.80 DE 3046409**

(43) Veröffentlichungstag der Anmeldung : **16.06.82 Patentblatt 82/24**

(45) Bekanntmachung des Hinweises auf die Patenterteilung : **26.03.86 Patentblatt 86/13**

(45) Bekanntmachung des Hinweises auf die Entscheidung über den Einspruch : **24.07.91 Patentblatt 91/30**

(84) Benannte Vertragsstaaten : **BE DE FR GB IT NL**

(56) Entgegenhaltungen :
**DE-A- 2 436 872**
**DE-A- 2 537 207**
**DE-A- 2 550 156**
**FR-A- 1 043 008**
**FR-A- 2 241 573**
**FR-A- 2 280 631**
**FR-A- 2 280 697**
**FR-A- 2 330 731**

(56) Entgegenhaltungen :
**Technisches Merkblatt "Desmophen 1100" der Bayer AG, Ausgabe 1.2.1972**
**H. Kittel, Lehrbuch der Lacke und Beschichtungen, Bd. I, Teil 2,S. 517-18; Verlag W.A. Colomb, Berlin-Oberschwandorf 1973**
**Angewandte Chemie, 72. Jahrgang (1960), Nr. 24, S. 934-39**

(73) Patentinhaber : **BAYER AG**
**W-5090 Leverkusen 1 Bayerwerk (DE)**

(72) Erfinder : **Nachtkamp, Klaus, Dr.**
**Leuchterstrasse 112**
**W-5000 Köln 80 (DE)**
Erfinder : **Bock, Manfred, Dr.**
**Haydnstrasse 18**
**W-5090 Leverkusen 1 (DE)**
Erfinder : **Mennicken, Gerhard, Dr.**
**Am Wasserturm 16**
**W-5090 Leverkusen 3 (DE)**
Erfinder : **Pedain, Josef, Dr.**
**Haferkamp 6**
**W-5000 Köln 80 (DE)**
Erfinder : **Mirgel, Volker, Dr.**
**Moltkestrasse 9**
**W-5000 Köln 40 (DE)**
Erfinder : **König, Eberhard, Dr.**
**Gelber Weg 22**
**W-6242 Kronberg 2 (DE)**
Erfinder : **König, Klaus, Dr.**
**Heymannstrasse 50**
**W-5090 Leverkusen 1 (DE)**

**EP 0 053 766 B2**

Jouve, 18, rue Saint-Denis, 75001 PARIS

## Beschreibung

Die vorliegende Erfindung betrifft ein neues Verfahren zur Herstellung von Überzügen einer hohen Steinschlagfestigkeit unter Verwendung von neuen thermisch vernetzbaren Einkomponentenbeschichtungsmitteln, die blockierte Isocyanatgruppen enthalten.

Die Verwendung von blockierten Isocyanaten zur Herstellung von thermisch härtbaren Polyurethan-Beschichtungen ist bekannt (vgl. z.B. Kunststoff-Handbuch, Band VII, Polyurethane, Carl Hanser Verlag München, 1966, Seiten 11-13 und 21 ff). Es sind eine Reihe von Verbindungen beschrieben, die sich zur reversiblen Blockierung von Isocyanaten eignen. Unter diesen kommt der Klasse der C-H-aciden Verbindungen (Beispiele: Malonsäure- und Acetessigsäureester) aufgrund günstiger chemischer und physiologischer Eigenschaften eine besondere Bedeutung zu (vgl. z. B. DE-OSen 2 342 603, 2 436 872, 2 550 156, 2 612 783, 2 612 784 und 2 612 785). In DE-OS 2 550 156 sowie DE-AS 2 623 081 und DE-AS 2 639 491 werden Polyurethan-Einbrennlacke auf Basis von mit Malonsäureestern oder Acetessigsäureestern blockierten aliphatischen Polyiso-cyanaten und organischen Polyhydroxylverbindungen beschrieben.

Die in den genannten Veröffentlichungen beschriebenen Systeme weisen die typischen Eigenschaften von Decklacken wie hohe Härte, Glanz, Vergilbungs- und Witterungsbeständigkeit auf.

Wie eigene Untersuchungen zeigten (siehe nachstehende Vergleichsversuche), sind die Polyurethan-Einbrennlacke der genannten Veröffentlichungen jedoch zur Herstellung von Beschichtungen einer sehr hohen Stoß- und Schlagfestigkeit wenig geeignet. Es besteht jedoch ein zunehmender Bedarf an Beschichtungsmitteln, die die Herstellung von Stoß- und schlagfesten Beschichtungen zum Schutz der Oberflächen von Industriegütern wie z. B. Maschinenteilen, Fahrzeugkarosserien oder Transportbehältern gestatten.

Bislang verwendete man hierzu Beschichtungsmittel auf Basis von Bitumen oder PVC bzw. von speziellen Aminvernetzten Polyurethan-Systemen (DE-AS 2 131 299). Dis erstgenannten Systeme auf Basis von Bitumen oder PVC sind mit dem Nachteil behaftet, daß ein ausreichender Schutz erst mit sehr hohen Schichtdicken von mehr als 1 mm gewährleistet ist. Dies hat zur Folge, daß die Beschichtungen ein sehr hohes Gewicht aufweisen und aufgrund ihrer Oberflächenstruktur nicht hochglänzend lackierbar sind. Sie können daher aus optischen Gründen nur an weniger sichtbaren Karosserieteilen angebracht werden und nicht überall dort, wo es für einen optimalen Schutz gegen Steinschlag sinnvol wäre. Die genannten aminvernetzten Polyurethan-Systeme gewährleisten zwar in wesentlich dünneren Schichten einen hochelastischen Oberflächenschutz, haben jedoch den Nachteil, daß sie mit relativ hohem Energieaufwand (60 Min/140-160 °C, bzw. 30 Min/160 °C bzw. 10 Min/180 °C) eingebrannt werden müssen und daß beim Einbrennvorgang niedermolekulare Amine entweichen können, was zu Geruchsbelästigungen führt und darüber hinaus toxikologisch bedenklich sein kann.

Aufgabe der vorliegenden Erfindung war es, ein neues Verfahren zur Herstellung von Überzügen zur Verfügung zu stellen, bei welchem Amin-freie, toxikologisch unbedenkliche Beschichtungsmittel zur Anwendung gelangen, die bei vergleichsweise niedrigen Temperaturen aushärten und in vergleichsweise dünner Schicht einen nochelastischen Oberflachenschutz gewährleisten. Darüber hinaus sollten die Beschichtungsmittel einkomponentig angewandt werden können und bei geringem Lösungsmittelgehalt bei Raumtemperatur flüssig und lagerstabil sein.

Diese Aufgabe konnte durch die Verwendung nachstehend näher beschriebenen Beschichtungsmittel, welche als Polyisocyanatkomponente bestimmte Dialkylmalonat-blockierte Polyisocyanate der Diphenylmethanreihe und/oder Dialkylmalonatblockierte NCO-Präpolymere auf Basis derartiger Polyisocyanate und als Polyhydroxylkomponente bestimmte Polyesterpolyole enthalten, gelöst werden.

Dialkylmalonat-blockierte Polyisocyanate der genannten Art sind bislang als Bindemittel für feuchtigkeitshärtende Dichtungsmassen bekannt geworden (US-PS 3 779 794). Wegen des völlig andersartigen Härtungsmechanismus der in dieser Veröffentlichung beschriebenen Systeme unterscheiden sich diese grundsätzlich von den nachstehend näher beschriebenen erfindungsgemäß zu Verwendenden Beschichtungsmitteln. Darüber hinaus werden gemäß US-PS 3 779 794 vergleichsweise weiche und mechanisch wenig belastbare Materialien mit Zugfestigkeiten von weniger als 1 MPa erhalten, die als Dichtungsmassen für die Montage von Glasscheiben, insbesondere im Automobilbau, jedoch nicht als mechanisch stark beanspruchbare Beschichtungen geeignet sind. Demgegenüber gestattet das nachstehend näher beschriebene erfindungsgemäße Verfahren die Herstellung von Beschichtungen, die eine Zugfestigkeit von ca. 20-30 MPa aufweisen und demzufolge mechanisch stark beanspruchbar sind.

Gegenstand der Erfindung ist ein

Verfahren zur Herstellung von Überzügen einer hohen Steinschlagfestigkeit durch Beschichtung beliebiger hitzeresistenter Substrate mit einem unter dem Einfluß von Hitze aushärtbaren Beschichtungsmittel, welches als Bindemittel Kombinationen von blockierten Polyisocyanaten mit organischen Polyhdroxylverbindungen enthält, und anschließende Aushärtung der Beschichtung bei 90-220°C, dadurch gekennzeichnet, daß als Beschichtungsmittel solche verwendet werden, die als Bindemittel Kombinationen aus

a) einer Polyisocyanatkomponente mit Dialkylmalonatblockierten Isocyanatgruppen und einem Gehalt an blockierten Isocyanatgruppen,berechnet als NCO, bezogen auf das Gewicht der Polyisocyanatkomponente exclusiv dem Gewicht des Blockierungsmittels, von 3 bis 33,6 Gew.-% bestehend aus

aa) mindestens einem, Dialkylmalonat-blockierten, gegebenenfalls alkylsubstituierten Diisocyanatodiphenylmethan und/oder

ab) mindestens einem, Dialkylmalonat-blockierten, NCO-Präpolymeren auf Basis von überschüssigen Mengen an, gegebenenfalls alkylsubstituiertem Diisocyanatodiphenylmethan und mindestens zwei Hydroxylgruppen aufweisenden organischen Verbindungen und

b) einer Polyolkomponente mit einer (mittleren) Hydroxylfunktionalität von größer als 2 und einem Gehalt an alkoholischen Hydroxylgruppen von 1,5 bis 8 Gew.-%, bestehend aus mindestens einem Polyesterpolyol in einem Äquivalentverhältnis von blockierten Isocyanatgruppen zu Hydroxylgruppen von 0,2 :1 bis 2:1 entsprechenden Mengen enthalten.

Erfindungswesentlich ist, daß in den erfindungsgemäß zu verwendenden Beschichtungsmitteln als Bindemittel Kombinationen einer bestimmten Polyisocyanatkomponente a) mit einer bestimmten Polyhydroxylkomponente b) vorliegen.

Die Isocyanatgruppen der Polyisocyanatkomponente a) sind mit Dialkylmalonat (Malonsäuredialkylester) blockiert. Die Polyisocyanatkomponente a) weist, bezogen auf das Gewicht exclusive dem Gewicht des Blockierungsmittels, einen Isocyanatgehalt, berechnet als NCO (Molekulargewicht = 42) von 3 bis 33,6, vorzugsweise 5 bis 25 Gew.-% auf. Sie besteht aus der obengenannten Komponente aa) und/oder der obengenannten Komponente ab).

Zur Herstellung der Polyisocyanatkomponente a) geeignete, gegebenenfalls Alkyl-substituierte Diisocyanatodiphenylmethane sind beliebige Verbindungen oder Gemische von Verbindungen der Formel

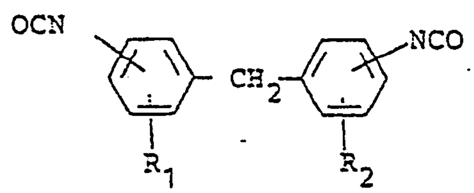

in welcher $R^1$ und $R^2$ für gleiche oder verschiedene Reste stehen und Wasserstoff oder einen $C_1$-$C_{18}$-Alkylrest, vorzugsweise für Wasserstoff oder einen Methylrest bedeuten.

Besonders gut geeignet sind solche Diisocyanate der genannten allgemeinen Formel, für welche beide Reste $R^1$ und $R^2$ für Wasserstoff oder für welche einer der genannten Reste für Wasserstoff und der zweite der genannten Reste für eine Methylgruppe stehen. Beispiele geeigneter Diisocyanate sind 2,4'-und 4,4'-Diisocyanatodiphenylmethan, sowie deren gegebenenfalls 2,2'-Diisocyanatodiphenylmethan in untergeordneten Mengen enthaltenden Gemische, 3,3'-Dimethyl-4,4'-diisocyanato-diphenylmethan, die gemäß europäischer Patentanmeldung 80 10 4883.6 (US-Anmeldung 182 569 vom 29.8.1980) erhältlichen Isomeren, Methyl-substituierten Diisocyanatodiphenylmethane, d. h. insbesondere 3,4'-Diisocyanato-4-methyl-diphenylmethan, 3,4'-Diisocyanato-6-methyl-diphenylmethan, 2,3'-Diisocyanato-4'-methyl-diphenylmethan und/oder 2,3'-Diisocyanato-6'-methyl-diphenylmethan bzw. beliebige Gemische dieser Isomeren. Geeignet sind auch die entsprechenden gemäß deutscher Patentanmeldung 3032128.9 zugänglichen, höhere Alkylreste als Substituenten aufweisenden Diisocyanate bzw. Diisocyanatgemische.

Zur Herstellung der Polyisocyanatkomponente ab) geeignete Hydroxylgruppen aufweisende Verbindungen sind insbesondere einfache zwei- oder dreiwertige aliphatische Alkohole des Molekulargewichtsbereichs 62-200, die aus der Polyurethanchemie an sich bekannten, Ethergruppen aufweisenden Polyole des Molekulargewichtsbereichs 106-5 000, vorzugsweise 500 bis 4 000 oder die aus der Polyurethanchemie an sich bekannten Polyesterpolyole des Molekulargewichtsbereichs 178-4 000, vorzugsweise 400 bis 3 000.

Beispiele geeigneter aliphatischer Alkohole sind Ethylenglykol, Propandiol-1,2 und -1,3, Butandiol-1,3 und -1,4, die isomeren Pentandiole, Hexandiole oder Octandiole wie z. B. 2-Ethylhexandiol-1,3, Trimethylolpropan oder Glycerin.

Beispiele geeigneter, ethergruppenaufweisender Polyole sind Diethylenglykol, Dipropylenglykol, oder die aus der Polyurethanchemie an sich bekannten Ethoxylierungs- und/oder Propoxylierungsprodukte geeigneter zwei- bis vierwertiger Startermoleküle wie z. B. die obengenannten einfachen Alkanpolyole oder von Wasser, Ammoniak, Ethylendiamin, Anilin oder Triethanolamin. Bevorzugte Ethergruppen aufweisende Polyole sind die

in der Polyurethanchemie an sich bekannten Polyetherpolyole des obengenannten bevorzugten Molekulargewichtsbereichs.

Beispiele geeigneter Polyesterpolyole sind insbesondere die in der Polyurethanchemie an sich bekannten Umsetzungsprodukte von mehrwertigen Alkoholen, beispielsweise von Alkanpolyolen der oben beispielhaft genannten Art mit unterschüssigen Mengen an Polycarbonsäuren bzw. Polycarbonsäureanhydriden, insbesondere Dicarbonsäuren bzw. Dicarbonsäureanhydriden. Zur Herstellung der Polyesterpolyole geeignete Polycarbonsäuren bzw. Polycarbonsäureanhydride sind beispielsweise Oxalsäure, Bernsteinsäure, Adipinsäure, Sebacinsäure, Phthalsäure, Isophthalsäure, Phthalsäureanhydrid, Tetrahydrophthalsäureanhydrid, Hexahydrophthalsäureanhydrid, Maleinsäure, Maleinsäureanhydrid, Fumarsäure oder dimere bzw. trimere Fettsäuren. Bei der Herstellung der Polyesterpolyole können selbstverständlich beliebige Gemische der beispielhaft genannten mehrwertigen Alkohole mit beliebigen Gemischen der beispielhaft genannten Saüren bzw. Säureanhydride umgesetzt werden.

Die Herstellung der der Polyisocyanatkomponente ab) zugrundeliegenden NCO-Präpolymeren erfolgt in an sich bekannter Weise durch Umsetzung überschüssiger Mengen an Diisocyanaten der oben beispielhaft genannten Art mit mehrwertigen Hydroxylverbindungen der zuletzt beispielhaft genannten Art. Bei dieser Umsetzung wird im allgemeinen ein NCO/OH-Äquivalentverhältnis von 1,2 : 1 bis 20 : 1, vorzugsweise 1,5 : 1 bis 10 : 1 eingehalten. Bei Verwendung eines Diisocyanat-Überschusses entstehen Gemische von Präpolymeren ab) mit einfachen Diisocyanaten aa) die in Dialkylmalonat-blockierter Form als solche in den erfindungsgemäßen Beschichtungsmitteln eingesetzt werden können.

Zur Herstellung der Polyisocyanatkomponente a) werden die Diisocyanate und/oder NCO-Präpolymeren in an sich bekannter Weise mit Dialkylmalonat blockiert. Unter « Dialkylmalonat » sind im Rahmen der vorliegenden Erfindung die Diester der Malonsäure sowohl mit $C_1$-$C_8$-Alkanolen wie Methanol, Ethanol, n-Propanol, n-Butanol, Isobutanol, n-Hexanol, n-Octanol oder Isooctanol als auch mit cycloaliphatischen Alkoholen wie Cyclopentanol oder Cyclohexanol als auch mit araliphatischen Alkoholen wie Benzylalkohol oder 2-Phenylethanol zu verstehen. Ganz besonders bevorzugt wird jedoch Diethylmalonat (Malonsäure-diethylester) als Blockierungsmittel verwendet. Die Blockierungsreaktion geschieht in an sich bekannter Weise (vgl. DE-OS 2 342 603 oder DE-OS 2 550156) mit Hilfe basischer Katalysatoren, wie z. B. Natriumphenolat ; Natriummethylat oder anderer Alkali-Alkoholate. Auch andere organische Alkali-Verbindungen, wie z. B. Natriummalonat kommen in Betracht. Die Katalysatoren werden in einer Menge von 0,1 %-2 %, bezogen auf das Gesamtgewicht der Reaktionskomponenten eingesetzt. Die Einsatzmenge an Dialkylmalonat sollte mindestens 1 Mol pro Isocyanatäquivalent betragen ; es ist jedoch zweckmäßig, einen 5-20 %igen Überschuß an Blockierungsmittel zu verwenden.

Grundsätzlich ist es auch möglich, ein der Definition aa) entsprechendes jedoch unblockiertes Diisocyanat nur teilzublockieren, so daß beispielsweise 40-90 % der Isocyanatgruppen in blockierter Form vorliegen, und anschließend das teilblockierte Diisocyanat mit einer Polyolkomponente der oben beispielshaft genannten Art zur Komponente ab) bzw. einem Gemisch aus der Komponente ab) mit einer Komponente aa) umzusetzen.

Die Herstellung von erfindungsgemäß zu verwendenden Kombinationen der Komponenten a) und b) kann analog hierzu, nicht nur wie nachstehend beschrieben durch Abmischen der Einzelkomponenten, sondern auch dergestalt erfolgen, daß man der Definition aa) und/oder ab) entsprechende, jedoch unblockierte Polyisocyanate oder Polyisocyanatgemische teilblockiert, so daß noch beispielsweise bis zu 30% der NCO-Gruppen in freier Form vorliegen, und anschließend eine solche Menge der als Komponente b) geeigneten, nachstehend beschriebenen Polyesterpolyole hinzufügt, daß nach der spontan ablaufenden Additionsreaktion zwischen den freien NCO-Gruppen und einem Teil der Hydroxylgruppen des Polyesterpolyols ein Gemisch aus der Definition ab) und gegebenenfalls aa) entsprechenden blockierten Polyisocyanaten und überschüssigem Polyesterpolyol b) vorliegt, für welches das Äquivalentverhältnis von blockierten NCO-Gruppen zu Hydroxylgruppen innerhalb des erfindungswesentlichen Bereichs von 0,6 : 1 bis 2 : 1 liegt.

Die Blockierungsreaktion kann lösungsmittelfrei oder in Anwesenheit von gegenüber Isocyanaten inerten Lösungsmitteln erfolgen. Als solche kommen beispielsweise in Betracht : Ethylacetat, Methylglykolacetat, Ethylglykolacetat, Diethylenglykolmonomethyletheracetat, Methylethylketon, Methylisobutylketon, Toluol, Xylol sowie die in der Lackchemie üblichen höhersiedenden Kohlenwasserstoffgemische.

Die vorgenannten Lösungsmittel können einzeln oder als Gemische zum Einsatz kommen. Anstelle von Lösungsmitteln ist es auch möglich, Weichmacher zu verwenden, wie z. B. handelsübliche Phosphorsäureester, Phthalsäureester oder Sulfonsäureester.

Insbesondere die beispielhaft genannten niedrigsiedenden Lösungsmittel können nach der Blockierungsreaktion destillativ entfernt werden, so daß praktisch lösungsmittelfreie Dialkylmalonat-blockierte Polyisocyanate als Komponente a) vorliegen. Es ist jedoch auch möglich, die beispielhaft genannten Lösungsmittel oder Weichmacher nicht zu entfernen, es ist jedoch bevorzugt, ihre Menge so zu bemessen, daß in den erfindungsgemäßen Beschichtungsmitteln ein Festkörpergehalt von mindestens 60 Gew.-%, vorzugsweise 70 bis 90 Gew.-

% vorliegt.

Bei dem Komponente b) der erfindungsgemäß zu verwendenden Beschichtungsmittel handelt es sich um ausgewählte Polyesterpolyole bzw. ausgewählte Gemische von Polyesterpolyolen einer (mittleren) OH-Funktionalität von größer als 2. Dies bedeutet, daß bei der Herstellung dieser Polyesterpolyole neben den üblichen difunktionellen Aufbaukomponenten (Dicarconsäuren und Diole) 3 bis 20, vorzugweise 8 bis 15 Äquivalent-%, bezogen auf die Gesamtmenge der bei der Polyesterherstellung eingesetzten Ausgangsmaterialien, an mindestens trifunktionellen Aufbaukomponenten mitverwendet werden müssen, bzw. daß bei der Verwendung von Gemischen von separat hergestellten Polyesterpolyolen der Anteil an mindestens trifunktionellen Aufbaukomponenten, bezogen auf alle bei der Herstellung der einzelnen Polyesterpolyole eingesetzten Aufbaukomponenten dieser Voraussetzung entspricht. So ist es beispielsweise möglich, difunktionelle Polyesterpolyole mit höherfunktionellen Polyesterpolyolen abzumischen um so zu einem Polyestergemisch zu gelangen, welches der genannten Bedingung bezüglich der mittleren Hydroxylfunktionalität entspricht. Die erfindungswesentliche Polyolkomponente b) weist im übrigen einen Gehalt an alkoholischen Hydroxylgruppen von 1,5 bis 8, vorzugsweise 3 bis 6 Gew.-% auf.

Grundsätzlich sind für die erfindungsgemäß zu verwendenden Beschichtungsmitteln alle beliebigen, diesen Definitionen entsprechenden Polyesterpolyole geeignet. Dies bedeutet, daß alle beliebigen, oben beispielhaft genannten Ausgangsmaterialien auch zur Herstellung der Polyesterkomponente b) eingesetzt werden können. Bevorzugte Polyesterpolyole b) sind jedoch solche, deren Alkoholkomponente zumindest zu 80, vorzugsweise zu 100 Hydroxyläquivalent-% aus Butandiol-1,4, Hexandiol-1,6 und/oder Diethylenglykol und Trimethylolpropan und deren Säurekomponente zumindest zu 50, vorzugsweise 70 Carboxyläquivalent-% aus Phthalsäure bzw. Phthalsäureanhydrid bevorzugt sind solche Polyesterpolyole b), bei deren Herstellung Hexandiol-1,6, Trimethylolpropan, Isophthalsäure und Phthalsäure bzw. Phthalsäureanhydrid eingesetzt wurde.

Die Herstellung der Polyesterpolyole b) erfolgt nach bekannten Methoden, wie sie z. B. in Houben-Weyl, Methoden der organischen Chemie, Band XIV/2, G. Thieme-Verlag, Stuttgart, 1963, Seiten 1-47 beschrieben sind.

Zur Herstellung der in den erfindungsgemäß zu verwendenden Beschichtungsmitteln vorliegenden Bindemittel werden die Polyisocyanatkomponente a) und die Polyesterkomponente b) abgemischt, und zwar so, daß die Mengenverhältnisse einem Äquivalentverhältnis von blockierten Isocyanatgruppen zu Hydroxylgruppen von 0,6 : 1 bis 2 : 1, vorzugsweise von 0,9 : 1 bis 1,4 : 1 entsprechen. Es ist darauf zu achten, daß beim Vermischen der Komponenten unterhalb der Temperatur gearbeitet wird, bei der die blockierten NCO-Gruppen mit den OH-Gruppen reagiren können. Da die Gelierungstemperatur der erfindungsgemäßen Systeme über + 50 °C liegt (vgl. nachfolgend beschriebene Lagerstabilitätstests), ist die Einhaltung dieser Bedingung nicht problematisch.

Die Gemische aus den Komponenten a) und b) stellen die in den erfindungsgemäß zu verwendenden Beschichtungsmitteln vorliegenden Bindemittel dar. Wie schon bei der Beschriebung der Herstellung der Polyisocyanatkomponente a) angegeben, können die erfindungsgemäß zu verwendenden Beschichtungmittel neben diesen Bindemitteln Lösungsmittel oder Weichmacher enthalten. Diese Hilfsmittel können entweder, wie bereits oben ausgeführt, bereits bei der Herstellung der blockierten Polyisocyanate a) oder auch zu einem beliebigen späteren Zeitpunkt zugesetz werden. In diesem Zusammenhang muß jedoch hervorgehoben werden, daß die erfindungsgemäßen Beschichtungsmittel für ihr wichtigstes Einsatzgebiet, die Herstellung von hochschlagfesten Beschichtungen vorzugweise in lösungsmittelarmer Form verarbeitet werden, obwohl grundsätzlich die Mitverwendung hoher Lösungsmittelmengen nicht ausgeschlossen werden kann. Vorzugweise weisen demzufolge die erfindungsgemäßen Beschichtungsmittel Festkörpergehalte von mehr als 60 Gew.-%, insbesondere von 70 bis 90 Gew.-% auf.

Neben dem erfindungswesentlichen Bindemittel und den bereits erwähnten, gegebenenfalls vorliegenden Lösungsmitteln oder Weichmachern können die erfindungsgemäß zu verwendenden Beschichtungsmittel auch alle beliebigen in der Lacktechnologie an sich bekannten Hilfs- und Zusatzmittel wie Pigmente, Füllstoffe, Verlaufshilfsmittel oder die Vernetzungsreaktion beschleunigende Katalysatoren enthalten. Insbesondere können der erfindungsgemäßen Beschichtungsmitteln den Korrosionsschutz verbessernde Zusatzmittel wie z. B. Epoxidgruppen aufweisende Verbindungen, beispielsweise die bekannten Kondensationsprodukte aus 4,4′-Dihydroxy-diphenyl-propan-2,2 (Bisphenol A) und Epichlorhydrin zugesetzt werden. Die Menge dieser im allgemeinen festen Hilfs- und Zusatzmittel ist bei der Berechnung des obengenannten Festkörpergehalts mit zu berücksichtigen.

Die erfindungsgemäß zu verwendenden Beschichtungsmittel stellen bei Raumtemperatur flüssige und lagerstabile Gemische dar.

Zur Durchführung der erfindungsgemäßen Verfahrens zur Herstellung von Überzügen unter Verwendung der erfindungsgemäß zu verwendenden Beschichtungsmittel werden diese nach an sich bekannten Methoden,

beispielsweise durch Spritzen, Streichen, Tauchen, Fluten oder mit Hilfe von Walzen oder Rakeln auf beliebige hitzeresistente Substrate ein- oder mehrschichtig aufgetragen. Das erfindungsgemäße Verfahren eignet sich zur Herstellung von Überzügen auf Metallen, Kunststoffen, Holz oder Glas. Besonders gut geeignet ist das erfindungsgemäße Verfahren zur Herstellung von Überzügen auf Stahlblechen, wie sie beispielsweise bei der Herstellung von Fahrzeugkarosserien, Maschinen, Verkleidungsblechen, Fässern oder Kontainern Verwendung finden. Die beim erfindungsgemäßen Verfahren zu beschichtenden Substrate können vor der Durchführung der erfindungsgemäßen Verfahrens mit geeigneten Grundierungen versehen sein. Bei der Durchführung des erfindungsgemäßen Verfahrens wird die Menge der eingesetzten erfindungsgemäßen Beschichtungsmittel im allgemeinen so bemessen, daß Trockenschichtdicken von ca. 0,1 bis 0,2 mm vorliegen. Es ist jedoch auch möglich, wesentlich dickere Schichtdicken herzustellen.

Nach der Beschichtung der beispielhaft genannten Substrate werden bei der Durchführung des erfindungsgemäßen Verfahrens die aufgetragenen erfindungsgemäß zu verwendenden Beschichtungsmittel durch Erhitzen auf 90-220 °C, vorzugsweise 110-150 °C ausgehärtet. Aus Gründen der Energieersparnis wird man selbstverständlich den Vorteil der niedrigen Einbrenntemperaturen nutzen. Es ist jedoch für die Praxis von großer Bedeutung, daß auch bei höheren Temperaturen, wie sie z. B. bei Betriebsstörungen auf Lackieranlagen auftreten können, kein thermischer Abbau der Beschichtungen erfolgt.

Die ausgehärteten Überzüge lassen sich, wenn aus optischen Gründen gefordert, problemlos mit Decklacken versehen. Dabei kommt den erfindungsgemäß zu verwendenden Beschichtungsmitteln ihre Anwendbarkeit in vergleichweise dünnen Schichten zugute : im Gegensatz zu den dickschichtig anzuwendenden schlagfesten Beschichtungen des Standes der Technik zeigen sie keine Probleme in Bezug auf Verlauf und Oberflächenstruktur und können daher hochglänzend überlackiert werden. Diese Eigenschaft ermöglicht die Anwendung der erfindungsgemäß zu verwendenden Beschichtungsmittel in Bereichen, wo ein elastischer Oberflächenschutz bisher aus ästhetischen Gründen nicht angebracht werden konnte, so zum Beispiel an den gut sichtbaren Teilen von Fahrzeugkarosserien, die durch Steinschlag starken mechanischen Beanspruchungen ausgesetz sind.

Der mit dem erfindungsgemäßen Verfahren erreichbare Oberflächenschutz wird in den nachfolgenden Beispielen demonstriert. Hervorzuheben ist, daß die Schlagfestigkeit der Beschichtungen aus einem Zusammenwirken von hoher Elastizität und guter Haftung auf den zu schützenden Substraten resultiert. Alle Prozentangaben beziehen sich auf Gewichtsprozente.

Beispiel 1

Zu 1 000 g eines Gemisches aus 40 % 3,4′-Diisocyanato-4-methyl-diphenylmethan, 25 % 3,4′-Diisocyanato-6-methyldiphenylmethan, 20 % 2,3′-Diisocyanato-4′-methyl-diphenylmethan und 15 % 2,3′-Diisocyanato-6′-methyldiphenylmethan gibt man 400 g eines auf Propandiol-1,2 gestarteten Polypropylenoxid-Polyethers mit der OH-Zahl 112 und 400 g eines auf Ethylendiamin gestarteten Polypropylenoxid-Polyethers mit der OH-Zahl 60. Es wird 3 Stunden auf 60 °C erhitzt, wonach das entstandene Prepolymer einen NCO-Gehalt von 14,4 % aufweist. Man verdünnt mit 830 g eines handelsüblichen Lacklösungsmittel (Gemisch aus aromatischen Kohlenwasserstoffen mit einem Siedepunktsbereich von 183-207 °C) und kühlt auf Raumtemperatur ab. Dann gibt man unter Rühren 1 064 g Malonsäurediethylester, in dem zuvor 16 g Natriumphenolat aufgelöst wurde, zu. Es erfolgt eine schwach exotherme Reaktion, die bei ca. 50 °C zum Stillstand kommt. Nach deren Abklingen wird das Produkt bei Raumtemperatur ca. 8 Stunden gerührt, bis IR-Spektroskopisch keine NCO-Gruppen mehr nachweisbar sind.

Zu dem so erhaltenen blockierten Isocyanat gibt man 2 463 g eines Polyesters aus Hexandiol-1,6 und Trimethylolpropan (Molverhältnis 4 : 1), Isophthalsäure und Phthalsäure (Molverhältnis 5 : 1) mit der Hydroxylzahl 150, der zuvor mit 830 g des oben angegebenen Lacklösungsmittel verdünnt wurde. Man erhält ein hellgelbes, klares Produkt mit einem Festkörpergehalt von 75%. Die Viskosität beträgt 5 300 mPas bei 20 °C.

Eine Probe des Gemisches wird zur Prüfung auf Lagerstabilität bei + 50 °C in einem verschlossenen Gefäß gelagert. Nach 4 Wochen bei dieser Temperatur beträgt die Viskosität 15 000 mPas (20 °C). Eine 6 monatige Lagerung bei Raumtemperatur führt zu keinem nennenswerten Viskositätsanstieg. Damit ist gezeigt, daß das Produkt ausreichend lagerstabil ist, um als Einkomponentenbeschichtungsmittel eingesetzt zu werden.

Ein phosphatiertes und in üblicher Weise durch Elektrotauchlackierung grundiertes Stahlblech wird im Spritzverfahren mit dem Gemisch gemäß Beispiel 1 beschichtet. Anschließend wird durch 30 minütiges Einbrennen bei 130 °C ausgehärtet.

Schichtdicke : 150 µm (Trockenfilm).

Das beschichtete Blech wird einem in der Automobilindustrie üblichen Test unterzogen, der die mechanische Beanspruchung von Lacken durch Steinschlag simuliert. Dabei wird Basalt-Splitt mit Hilfe eines Druckluft-Beschußgerätes mit definiertem Druck auf das zu prüfende Blech geschleudert. Die Beschußzeit, die nötig

ist, um die Beschichtung bis auf das Metall zu durchschlagen, wird als Maß für die Qualität der Beschichtung genommen.

In Tabelle 1 sind die Beschußwerte der Beschichtung gemäß Beispiel 1 denen der Beschichtungen des Standes der Technik (Vergleichsbeispiele 2 und 3) gegenübergestellt.

Der Vergleich demonstriert den erfindungsgemäß erzielten technischen Fortschritt. Das durch thermische Vernetzung aus dem Gemisch nach Beispiel 1 erhaltene Polymere ist weiterhin durch folgende mechanische Daten charakterisiert :

Zugfestigkeit (DIN 53504) 20 MPa

Bruchdehnung (DIN 53504) 220 %.

Beispiel 2

(Vergleichsbeispiel in Hinblick auf DE-OS 2 550 156)

Es wird ein Einkomponentenbeschichtungsmittel hergestellt aus 1 000 g eines blockierten Isocyanates aus Isophorondiisocyanat, Trimethylolpropan und Malonsäurediethylester gemäß Beispiel 2 der DE-OS 2 550 156 und 1 200 g des oben in Beispiel 1 beschriebenen Polyesters aus Hexandiol-1,6, Trimethylolpropan, Isophthalsäure und Phthalsäure. Das Gemisch wird 75 %ig in dem in Beispiel 1 angegebenen Lacklösungsmittel gelöst und wie in Beispiel 1 beschrieben auf phosphatierte und grundierte Stahlbleche aufgetragen. Nach 30 minütigem Einbrennen bei 130 °C (Schichtdicke : 150 µm im Trockenfilm) wird der in Beispiel 1 beschriebene Beschußversuch durchgeführt.

Die Gegenüberstellung in Tabelle 1 zeigt, daß die Beschichtung gemäß DE-OS 2 550 156 eine wesentlich geringere Beständigkeit gegen Steinschlag besitzt als die Beschichtung gemäß Erfindung.

Beispiel 3

(Vergleichsbeispiel im Hinblick auf DE-AS 2 639 491)

1 000 g des in DE-AS 2 639 491 als « blockiertes Isocyanat 1 » beschriebenen Adduktes aus dem Hexamethylendiisocyanat-Biuret-Polyisocyanat und Acetessigsäure-ethylester (75 %ige Lösung) werden mit 2 490 g des ebenfalls in DE-AS 2 639 491 als « Polyesterharzlösung 1 » beschriebenen Polyester-Polyols aus 2,2-Dimethyl-propandiol-1,3, Adipinsäure, Trimethylolpropan und Phthalsäure (70 %ige Lösung) vermischt. Das so erhaltene Produkt wird wie in Beispiel 1 beschrieben auf phosphatierte und grundierte Stahlbleche aufgetragen. Nach 30 minütigem Einbrennen bei 130 °C (Schichtdicke : 150 µm im Trockenfilm) wird der in Beispiel 1 beschriebene Beschußversuch durchgeführt. Die Gegenüberstellung in Tabelle 1 zeigt, daß die Beschichtung gemäß DE-AS 2 639 491 eine wesentlich geringere Beständigkeit gegen Steinschlag besitzt als die Beschichtung gemäß Erfindung.

Beispiel 4

563 g des gemäß Beispiel 1 hergestellten erfindungsgemäßen Gemisches werden mit 63,6 g Titandioxid, 6,4 g Eisenoxid-Schwarzpigment, 17 g eines handelsüblichen Entlüftungsmittels, 86 g Talkum, 121 g Ethylglykolacetat, 121 g eines aromatischen. Kohlenwasserstoffgemisches (Siedebereich : 183-207 °C) sowie 22 g eines handelsüblichen Thioxotropierungsmittels auf Kieselsäure-Basis in einem Dissolver angerieben.

Man erhält ein gebrauchsfertiges Einkomponentenbeschichtungsmittel das sich zur Herstellung von Steinschlagschutz-Grundierungen eignet. Analog Beispiel 1 mit diesem Produkt beschichtete Stahlbleche zeigem im Beschuß-Versuch gute Eigenschaffen (siehe Tabelle 1).

Beispiel 5

Dieses Beispiel beschreibt die Herstellung eines Einkomponentenbeschichtungsmittels mit Hilfe von 4,4′-Diisocyanatodiphenylmethan.

Zu 250 g 4,4′-Diisocyanato-diphenylmethan gibt man bei Raumtemperatur 320 g Malonsäurediethylester, in dem 1 g einer 30 %igen Natriummethylatlösung in Methanol gelöst ist. Man erwärmt auf 60 °C, wobei bei einer leicht exothermen Reaktion eine klare Flüssigkeit entsteht. Nach 8 Stunden bei dieser Temperatur beträgt der NCO-Gehalt des Gemisches 2,5 %.

Nun gibt man in einem Guß die Lösung von 747 g eines Polyesters in 330 g Ethylglykolacetat zu und setzt bei 60°C weiter um, bis keine NCO-Gruppen mehr nachweisbar sind (Zusammensetzung des Polyesters : 29,6 % Isophthalsäure, 10,1 % Adipinsäure, 5,9 % o-Phthalsäure, 42,4 % Hexandiol-1,6, 12,0 % TMP, Hydroxylzahl: 145). Man erhält die 80 %ige Lösung eines Einkomponenten-Einbrenn-Lackes. Analog Beispiel 1 mit diesem

Produkt beschichtete Stahlbleche zeigen im Beschußversuch brauchbare Eigenschaften (siehe Tabelle 1).

Mechanische Daten der thermisch vernetzten Polymeren :
Zugfestigkeit (DIN 53504) 31,5 MPa
Bruchdehnung (DIN 53504) 140 %.

Beispiel 6

Dieses Beispiel beschreibt die Herstellung eines besonders elastischen Einkomponentenlacks unter Verwendung von 4,4'-Diisocyanato-diphenylmethan.

Man verfährt wie in Beispiel 5 angegeben und setzt 250g 4,4'-Diisocyanato-diphenylmethan mit 260 g Malonsäurediethylester in Gegenwart von 1 g Natriummethylat um. Die noch freien NCO-Gruppen werden mit 323 g eines Hydroxyl-Polyesters aus Hexandiol-1,6, Neopentylglykol (Molverhältnis 1 : 1) und Adipinsäure (mittleres Molgewicht ca. 1 700) zur Reaktion gebracht und das verkappte Polyisocyanat 80 %ig in Ethylglykolacetat gelöst.

Bei Raumtemperatur werden nun 730 g einer 80 %igen Ethylglykolacetat-Lösung eines Polyesters aus 29,6 % Isophthalsäure, 10,1 % Adipinsäure, 5,9 % o-Phthalsäure, 42,4 % Hexandiol-1,6 und 12,0 % Trimethylolpropan der Hydroxylzahl 145 zugegeben.

Mit diesem Einkomponenten-Einbrennlack werden analog Beispiel 1 Stahlbleche beschichtet. Die Ergebnisse der Beschußversuche in Tabelle 1 demonstrieren die Eignung des Produktes als elastischer Oberflächenschutz.

Beispiel 7

Dieses Beispiel beschreibt die Herstellung eines Einkomponentenbeschichtungsmittels unter Verwendung eines Gemisches von 2,4'- und 4,4'-Diisocyanato-diphenylmethan.

Wie in Beispiel 5 angegeben setzt man 1 000 g eines Gemisches aus 40 % 2,4'- und 60 % 4,4'-Diisocyanatodiphenylmethan in Gegenwart von 3 g Natriummethylat mit 960 g Malonsäurediethylester um. Die noch vorhandenen NCO-Gruppen bringt man nun mit 143 g 2-Ethylhexandiol-1,3 zur Reaktion und löst das Produkt, das keine freien NCO-Gruppen mehr enthält, 80 %ig in Xylol/Ethylglykolacetat 1 : 1.

Bei Raumtemperatur werden nun 2 900 g einer 80 %igen Polyester-Lösung in Xylol/Ethylglykolacetat 1 : 1 zugegeben (Zusammensetzung des Polyesters : 29,6 % Isophthalsäure, 10,1 % Adipinsäure, 5,9 % o-Phthalsäure, 42,4 % Hexandiol-1,6, 12,0 % Trimethylolpropan, Hydroxylzahl : 145).

Mit diesem Einkomponenten-Einbrennlack werden analog Beispiel 1 Stahlbleche beschichtet. Die Ergebnisse der Beschußversuche sind aus Tabelle 1 ersichtlich.

Beispiel 8

Eine Mischung aus 760 g eines Polyethers auf Basis von Triethanolamin und Propylenoxid mit der Hydroxylzahl 148, 1 700 g eines Polyesters auf Basis von Adipinsäure, Hexandiol-1,6 und Neopentylglykol mit der Hydroxylzahl 66 sowie 45 g Trimethylolpropan wird mit 2 040 g Ethylglykolacetat verdünnt. In diese Lösung trägt man rasch 1 250 g 4,4'-Diisocyanatodiphenylmethan ein und rührt ca. 2 Stunden bei 60-70 °C, bis der NCO-Gehalt der Reaktionsmischung bei 3,2 % liegt. Man kühlt auf 50 °C ab und gibt eine Mischung aus 767 g Malonsäurediethylester und 14 g Natriumphenolat zu. Die Blockierungsreaktion verläuft leicht exotherm, so daß die Temperatur bis auf 70 °C ansteigt. Man rührt 1 Stunde nach, läßt auf Raumtemperatur abkühlen und gibt zu dem so erhaltenen blockierten Isocyanat 2 600 g einer 70 %igen Lösung eines Polyesters in Ethylglykolacetat, der die in Beispiel 7 angegebene Zusammensetzung besitzt.

Mit diesem Einkomponenten-Einbrennlack werden analog Beispiel 1 Stahlbleche beschichtet. Die Ergebnisse der Beschußversuche sind aus Tabelle 1 ersichtlich.

Tabelle 1

Ergebnisse der Beschußversuche

| Beschichtung (30 min/130°C, 150 µm) | Beschußzeit * Beschußdruck : 0,6 bar | + 1,05 bar |
|---|---|---|
| Beispiel 1 | 10 min | + 7 min |
| Vergleichsbeispiel 2 | 6,5 min | - |
| Vergleichsbeispiel 3 | 4,5 min | - |
| Beispiel 4 | 10 min | + 3,5 min |
| Beispiel 5 | 10 min | + 5 min |
| Beispiel 6 | 10 min | + 8,5 min |
| Beispiel 7 | 10 min | + 5,5 min |
| Beispiel 8 | 10 min | + 8 min |

*) Die Prüfungsbleche wurden zunächst mit 0,6 bar beschossen. Bei denjenigen Beschichtungen, die nach 10 min nicht durchschlagen waren, wurde der Beschußdruck auf 1,05 bar erhöht.

Weitere Erläuterungen : siehe Beispiel 1

## Patentansprüche

1. Verfahren zur Herstellung von Überzügen einer hohen Steinschlagfestigkeit durch Beschichtung beliebiger hitzeresistenter Substrate mit einem unter dem Einfluß von Hitze aushärtbaren Beschichtungsmittel, welches als Bindemittel Kombinationen von blockierten Polyisocyanaten mit organischen Polyhdroxylverbindungen enthält, und anschließende Aushärtung der Beschichtung bei 90-220°C, dadurch gekennzeichnet, daß als Beschichtungsmittel solche verwendet werden, die als Bindemittel Kombinationen aus

a) einer Polyisocyanatkomponente mit Dialkylmalonat-blockierten Isocyanatgruppen und einem Gehalt an blockierten Isocyanatgruppen,berechnet als NCO, bezogen auf das Gewicht der Polyisocyanatkomponente exclusiv dem Gewicht des Blockierungsmittels, von 3 bis 33,6 Gew.-% bestehend aus

aa) mindestens einem, Dialkylmalonat-blockierten, gegebenenfalls alkylsubstituierten Diisocyanatodiphenylmethan und/oder

ab) mindestens einem, Dialkylmalonat-blockierten, NCO-Präpolymeren auf Basis von überschüssigen Mengen an, gegebenenfalls alkylsubstituiertem Diisocyanatodiphenylmethan und mindestens zwei Hydroxylgruppen aufweisenden organischen Verbindungen und

b) einer Polyolkomponente mit einer (mittleren) Hydroxylfunktionalität von größer als 2 und einem Gehalt an alkoholischen Hydroxylgruppen von 1,5 bis 8 Gew.-%, bestehend aus mindestens einem Polyesterpolyol in einem Äquivalentverhältnis von blockierten Isocyanatgruppen zu Hydroxylgruppen von 0,2 :1 bis 2 :1 entsprechenden Mengen enthalten.

## Claims

1. A process for the production of non-chip coatings by coating of heat-resistant substrates with a heat-curing coating compound containing combinations of blocked polyisocyanates with organic polyhydroxyl compounds as binder and subsequent curing of the coating at 90 to 220°C, characterized in that the coating compounds used contain as binder combinations of

a) a polyisocyanate component containing dialkyl-malonate-blocked isocyanate groups and 3 to 33.6% by weight, based on the weight of the polyisocyanate component not including weight of the blocking agent, blocked isocyanate groups, expressed as NCO, and consisting of

aa) at least one dialkyl-malonate-blocked, optionally alkyl-substituted diisocyanatodiphenyl methane

and/or.
ab) at least one dialkyl-malonate-blocked NCO prepolymer based on excess quantities of optionally alkyl-substituted diisocyanatodiphenylmethane and organic compounds containing at least two hydroxyl groups and
b) a polyol component having an (average) hydroxyl functionality of greater than 2 and a content of alcoholic hydroxyl groups of 1.5 to 8% by weight and consisting of at least one polyester polyol in quantities corresponding to an equivalent ratio of blocked isocyanate groups to hydroxyl groups of 0.2 :1 to 2 :1.

## Revendications

1. Procédé de production de revêtements présentant une grande résistance aux impacts de pierres, par enduction de substrat résistants à la chaleur quelconque, avec une composition d'enduction thermiquement réticulable, contenant des combinaisons de polyisocyanates bloqués et de composés polyhydroxylés organiques comme liant, puis durcissement de l'enduit à 90-220°C, caractérisé en ce que l'on utilise comme compositions d'enduction des compositions qui contiennent, comme liant, des combinaisons de :
a) un composant polyisocyanate comportant des groupes isocyanates bloqués par du malonate de dialkyle et ayant une teneur en groupes isocyanates bloqués, calculée en NCO par rapport au poids du composant polyisocyanate à l'exclusion du poids de l'agent de blocage, de 3 à 33,6 % en poids, consistant en :
aa) au moins un diisocyanatodiphénylméthane bloqué par du malonate de dialkyle et portant éventuellement des substituants alkyles et/ou
ab) au moins un prépolymère, à groupes NCO bloqués par du malonate de dialkyle, à base de quantités excédentaires de diisocyanatodiphénylméthane éventuellement substitué par des groupes alkyles et de composés organiques présentant au moins deux groupes hydroxyles, et de
b) un composant polyol ayant une fonctionnalité hydroxyle (moyenne) supérieure à 2 et présentant une teneur en groupes hydroxyles alcooliques de 1,5 à 8 % en poids, consistant en au moins un polyesterpolyol, en des quantités correspondant à un rapport entre les équivalents de groupes isocyanates bloqués et de groupes hydroxyles compris entre 0,2 : 1 et 2 : 1.